# EUROPEAN PATENT APPLICATION

(11) **EP 4 179 935 A1**
(43) Date of publication of application: **17.05.2023**
(21) Application number: 22202253.5
(22) Date of filing: 18.10.2022
(51) Int. Cl.: A47J 43/07, B01F 27/111, B08B 9/08

(54) **CLEANING DEVICE OF A MIXING VESSEL FOR A FOOD PROCESSOR**

(30) Priority: 15.11.2021 IT 202100028907
(71) Applicant: Kyma Tech S.r.l., 84018 Scafati (SA) (IT); Marval Trading Soc. Coop., 80146 Napoli (IT)
(72) Inventor: Federico, Luigi, 84018 Salerno (NA) (IT)
(74) Representative: Carangelo, Pierluigi

(57) **Abstract**

A cleaning device (1) of a mixing vessel (20) for a food processor (30) is described, having a motor (31) provided with a rotating shaft (32), wherein the mixing vessel (20) comprises an inner wall (23, 24), adapted to contain a washing liquid and comprising a side wall (23) and a bottom wall (24).

The cleaning device (1) comprises:
- a central hub (2) adapted and configured to be operatively connected to the rotating shaft (32) to allow the cleaning device (1) to rotate about a rotation axis (Z-Z);
- at least one washing blade (PI, P2) which is integral with the central hub (2) and radially protruding from the central hub (2) with respect to the rotation axis (Z-Z) .

The washing blade (PI, P2) comprises at least one jet generating channel (3, 4) to provide a jet (Jl, J2) directed towards the inner wall (23, 24) and obtained by conveying a portion of washing liquid collected.

## Description

### FIELD OF THE INVENTION

The present invention relates to the technical field of food processors and relates, in particular, to a cleaning device of a mixing vessel for a food processor.

### BACKGROUND ART

As it is known, food processors are widely used both in the private and domestic sectors as well as in the professional sector. Food processors of the known type are motorized devices used to mix and/or cut and/or grate and/or blend and/or knead and/or cook food in a mixing vessel. For this purpose, food processors generally comprise an electric motor having a rotating motor shaft and one or more processing tools which may be selectively fixed to the rotating motor shaft so that, during use, they may be arranged inside the mixing vessel. The aforesaid processing tools comprise, for example, groups of blades or stirrers. The electric motor is generally housed in a base body of the food processor and the processing tools and the mixing vessel are coupled in a removable manner to the base body so as to be removed from the base body to be cleaned, for example washed with water and any detergents.

For example, the mixing vessels, just like common kitchenware, may be washed manually and/or in the dishwasher. Often, however, food residues tenaciously adhere to the inner walls of the mixing vessel and this makes the cleaning complex and long, with time and large amounts of water being wasted. Furthermore, the mixing vessels are bulky and therefore take up a lot of space inside dishwashers. Furthermore, both after being washed manually and/or in the dishwasher, it often happens that the mixing vessels are not cleaned in a satisfactory manner.

To facilitate the cleaning operations of the mixing vessels, different types of cleaning devices have been developed up to now. For example, special brushes or sponges for the manual cleaning have been developed, but the results obtained by the aforesaid known cleaning devices are often unsatisfactory.

Rotating cleaning devices have also been disclosed, which are provided with brushes or bristles, which, after the preparation of food, are installable inside the mixing vessels so as to be operatively connected to the motor and be rotated by the food processor motor itself to brush the inside walls of the mixing vessel. These rotating cleaning devices also have unsatisfactory performance and further require the use of relatively high amounts of water and electricity, as well as producing excessive vibrations and noise. Furthermore, the brushes or bristles of such rotating cleaning devices are subject to wear. Furthermore, during the rotation of the cleaning devices, such brushes or bristles vigorously impact against protrusions provided on the inner side wall of the mixing vessels, which are called breakwaters. This impact further increases noise, vibrations and wear. A rotating cleaning device of the type described above is disclosed in US 2017/0368519 A1.

It is a general object of the present description to provide a cleaning device which allows to remedy all or at least part of the issues described above with reference to the prior art.

The aforesaid object, as well as other objects which will be shown hereinafter, are achieved by means of a cleaning device of a mixing vessel for a food processor as defined in appended claim 1. Preferred and advantageous embodiments of the aforesaid cleaning device are defined in the appended dependent claims.

The invention will be better understood from the following detailed description of particular embodiments thereof, given by way of non-limiting example, with reference to the accompanying drawings briefly described in the following paragraphs.

### BRIEF DESCRIPTION OF THE DRAWINGS

**Figure** 1 shows a sectional front view of a food processor comprising a mixing vessel and a non-limiting embodiment of a cleaning device of the mixing vessel.
Figure 2 shows a front view of the cleaning device of Figure 1.
Figure 3 shows a vertical sectional front view of the cleaning device of Figure 1
Figure 4 shows a sectional top view of the cleaning device according to the section plane S1 indicated in Figure 2.
Figure 5 shows an enlarged part of Figure 4.
Figure 6 shows a partial sectional view of the cleaning device according to the section plane S2 indicated in Figure 2.

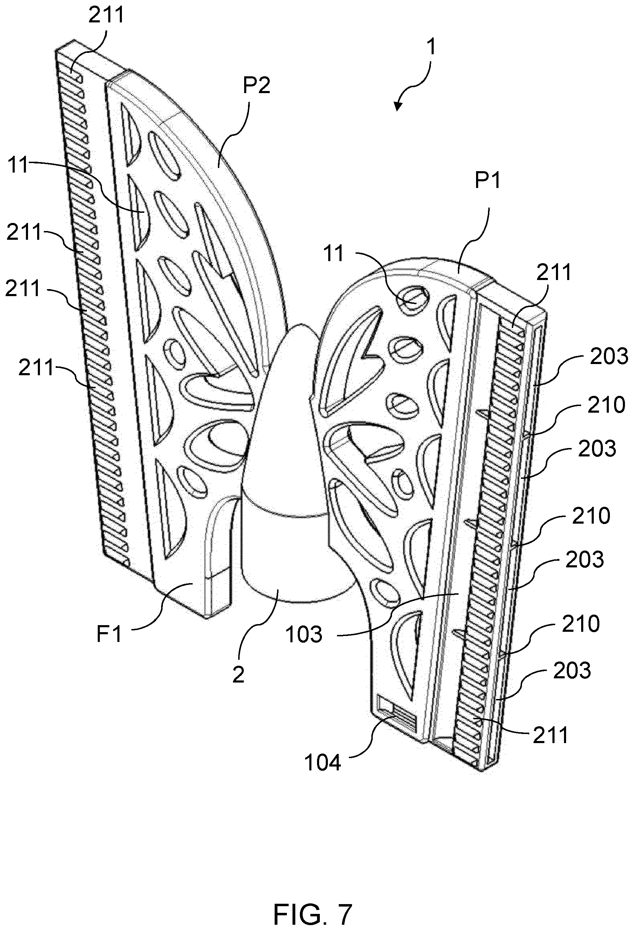

Figure 7 shows an isometric view of the cleaning device.
Figure 8 shows an isometric view of a further embodiment of the cleaning device.

### DETAILED DESCRIPTION

The Figures show a non-limiting example of an embodiment of a food processor 30. The food processor 30 is, for example, a processor adapted to mix ingredients for food preparations and/or cut ingredients and/or cook food preparations and/or knead and/or blend and/or grate edible ingredients.

The food processor 30 comprises a mixing vessel 20 having an inner wall 23, 24 comprising a side wall 23 and a bottom wall 24. Preferably, the side wall 23 is a tubular wall, for example, a flared wall. Preferably, the bottom wall 24 is a circular wall, for example, a plate-like circular wall. The mixing vessel 20 is a vessel configured to contain ingredients and/or food preparations which have to be processed by the food processor 30. The mixing vessel 20 is preferably made of a metallic material, for example, aluminum. The mixing vessel 20 comprises an upper opening 25 opposite to the bottom wall 24. In a manner *per se* known, the food processor 30 comprises a lid, not shown in the Figures, fixable to the mixing vessel 20 and adapted and configured to occlude the upper opening 25 in a removable manner.

The food processor 30 further comprises at least one motor 31, preferably an electric motor, provided with a rotating shaft 32. Preferably, the food processor 30 comprises a base 33 which houses the motor 31. The mixing vessel 20 is coupled to the base 33 which preferably acts as a support base for the mixing vessel 20. The coupling between the mixing vessel 20 and the base 33 is conveniently a removable coupling. Furthermore, such coupling is such as to prevent a relative rotation between the mixing vessel 20 and the base 33 during the operation of the food processor 30.

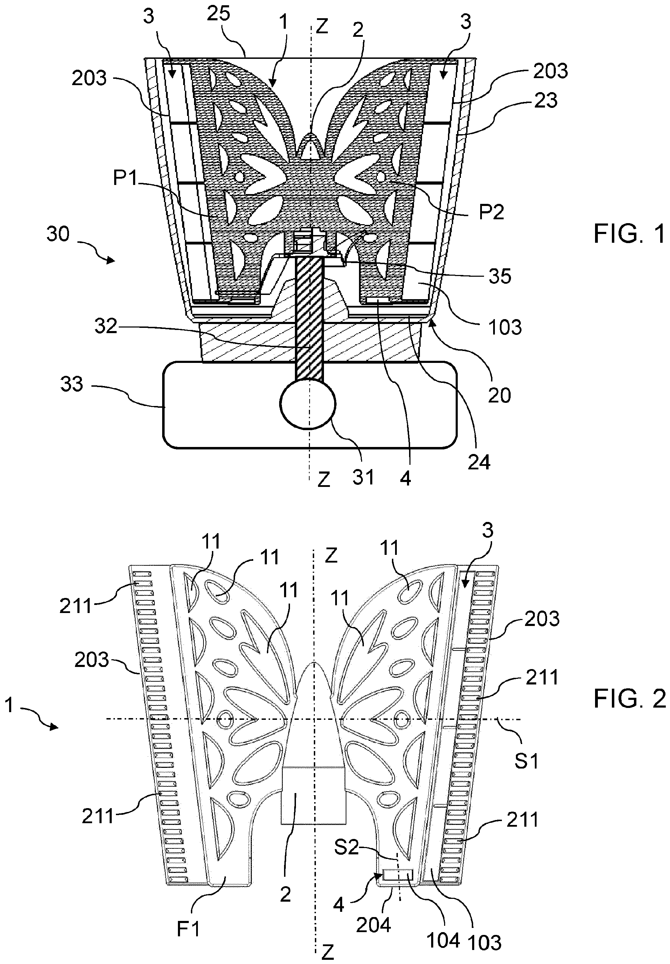

In the particular example shown in Figure 1, the food processor 30 comprises a processing tool 35, i.e., a food processing tool 35, mechanically coupled to the rotating shaft 32. In a manner *per* se known, the processing tool 35 comprises, for example, a set of blades, comprising a support hub to which a plurality of blades is firmly fixed, comprising, for example, two, three or four blades. The processing tool 35 is housed inside the mixing vessel 20, and is preferably coupled to the rotating shaft 32 in a removable manner, so as to be removed from the inside of the mixing vessel 20.

The food processor 30 further comprises a cleaning device 1 of the mixing vessel 20. After using the food processor 30 for food processing, the cleaning device 1 may be inserted inside the mixing vessel 20 to at least partially clean the inner wall 23, 24 and optionally the lower face of the removable lid of the mixing vessel 20.

The cleaning device 1 is preferably made of relatively hard and rigid plastic material, for example, it is made of ABS. Preferably, the cleaning device 1 is made in one-piece.

The cleaning device 1 comprises a central hub 2 adapted and configured to be operatively connected, directly or indirectly, to the rotating shaft 32 to allow the cleaning device 1 to rotate about a rotation axis Z-Z inside the mixing vessel 20.

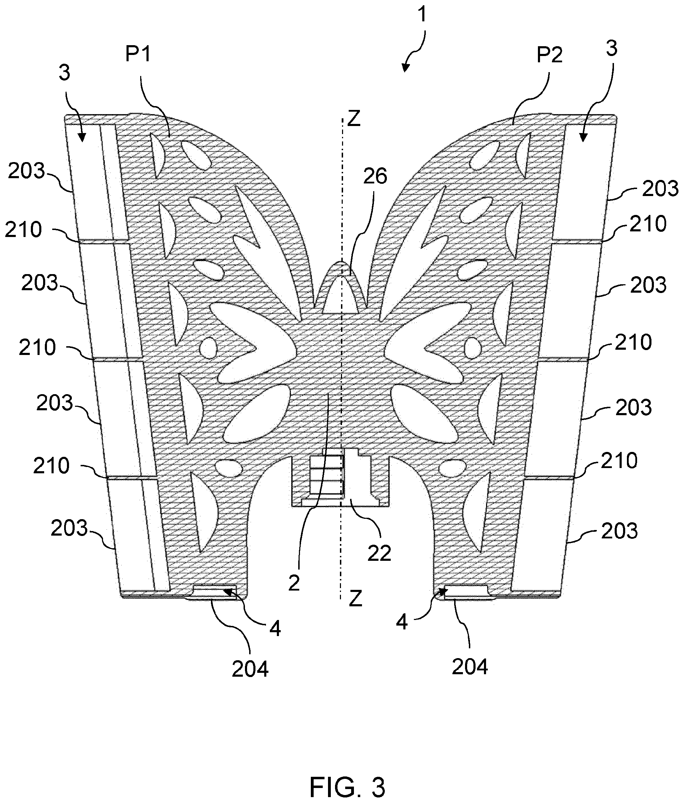

In the particular example shown in Figure 1, the central hub 2 is engaged on a head extension of the processing tool 35, therefore it is indirectly connected to the rotating shaft 32. For example, the central hub 2 has a body provided with a bottom recess 22 (Figure 3) engaged on the head portion of the processing tool 35. The engagement may be a forced engagement by shape coupling, a snap engagement, an interlocking engagement, a screw engagement, etc. However, it is possible to provide any mechanical coupling method which makes the processing tool 35 and the cleaning device 1 integral to each other in rotation. Furthermore, the central hub 2 may be mechanically coupled to the rotating shaft 32 without involving the interposition of the processing tool 35, either by directly coupling the central hub 2 to the rotating shaft 32 or by providing one or more intermediate rotation transmission elements between the rotating shaft 32 and the central hub 2.

In accordance with a preferred embodiment, the central hub 2 is in the shape of an ogive and is provided with a pointed or rounded upper end portion 26.

The cleaning device 1 further comprises at least one washing blade P1, P2 which is integral with the central hub 2 and radially protruding from the central hub 2 with respect to the rotation axis Z-Z.

The washing blade P1, P2, due to the rotation of the central hub 2, is configured to rotate about the rotation axis Z-Z by virtue of the torque imparted by the rotating shaft 32. The washing blade P1, P2 is preferably firmly fixed to the central hub 2, for example, the central hub 2 and the washing blade P1, P2 constitute a single piece, for example, obtained by means of injection molding of a plastic material or by means of a 3D printing process.

In accordance with an advantageous embodiment, according to the example shown in Figure 1, the washing blade P1, P2 is spaced apart from the side wall 23 and/or from the bottom wall 24, therefore in general from the inner wall 23, 24 of the mixing vessel 20, and does not interfere in abutment with said side wall 23 and/or with said bottom wall 24.

In accordance with an advantageous embodiment, the washing blade P1, P2 is a plate-like blade and comprises two main faces F1, F2 opposite to each other. Furthermore, in accordance with an advantageous embodiment, a plurality of through holes 11 is defined in the thickness of the washing blade P1, P2. These through holes 11, allow both to lighten the washing blade P1, P2, and therefore to decrease the inertia thereof, as well as to decrease aerodynamic and hydrodynamic resistance of the washing blade P1, P2 during the rotation thereof.

In accordance with an advantageous embodiment corresponding to the example shown in the attached Figures, the cleaning device 1 comprises two washing blades P1, P2, in particular a first washing blade P1 and a second washing blade P2, which are radially aligned with each other and mutually arranged on opposite sides with respect to the central hub 2. In other words, the first washing blade P1 and the second washing blade P2 are radially opposite to each other. In accordance with alternative embodiments, the number of washing blades P1, P2 may differ, for example, the washing blades P1, P2 may be three or four, preferably arranged at regular angular intervals, more preferably so that the center of gravity of the entire cleaning device 1 lies on the rotation axis Z-Z and does not cause vibrations due to mass eccentricity.

Since the first washing blade P1 and the second washing blade P2 are completely identical or similar to each other, from now on in the present description reference will be made, in general, to a washing blade P1, P2, except where not differently specified.

The washing blade P1, P2 comprises at least one jet generating channel 3, 4 having an inlet section 103, 104 adapted to collect a portion of a washing liquid contained inside the mixing vessel 20 during the rotation of the washing blade P1, P2. The jet generating channel 3, 4 comprises an outlet section 203, 204 adapted and configured to provide at least one jet J1, J2 directed towards the inner wall 23, 24 and obtained by conveying towards the outlet section 203, 204 the portion of washing liquid collected. Thereby, one or more high pressure hydrodynamic jets J1, J2, spatially concentrated and directed towards the inner wall 23, 24, are advantageously produced. For this to happen, a limited amount of washing liquid is sufficient, for example, an amount which in static conditions allows the cleaning device 1 to be immersed inside the mixing vessel 20 for no more than a quarter or no more than a fifth of the height thereof. This occurs by virtue of the fact that, during the rotation of the cleaning device 1, the washing liquid is in turn dragged in rotation by the washing blade P1, P2 so as to be intercepted by the inlet section 103, 104. The washing liquid may simply be water. In the case of particularly persistent debris, a small amount of coarse sea salt may be added to the washing liquid.

In accordance with a particularly advantageous embodiment, the washing blade P1, P2 is devoid of bristles and brushes. Thereby, the inner wall 23, 24 of the mixing vessel 20 is exclusively hydrodynamically cleaned without flexible elements brushing the inner wall 23, 24. Thereby, friction and wear are considerably reduced or almost completely eliminated.

In accordance with an embodiment, the jet is a jet J1 directed towards the side wall 23. In accordance with a further embodiment, the jet is a jet J2 directed towards the bottom wall 24. An embodiment in which the washing blade P1, P2 is such to produce at least two jets J1, J2, of which at least one jet J1 is directed towards the side wall 23 and at least one jet J2 is directed towards the bottom 24, is also particularly advantageous. For example, the jet generating channel 3, 4 comprises a first jet generating channel 3 adapted to direct a first jet J1 towards the side wall 23 and at least one second jet generating channel 4 adapted to direct a second jet J2 towards the bottom wall 24. The jet J1 directed towards the side wall 23 is preferably a radial jet and the jet J2 directed towards the bottom wall 24 is preferably an axial jet. These directions are not binding, since it may be convenient to impart inclinations, for example, comprised between -30° and +30°, with respect to the radial and axial directions, so as to increase, or at least optimize, the cleaning efficiency.

In accordance with a particularly advantageous embodiment, the jet generating channel 3, 4 is a tapered channel having a cross-section that shrinks going from the inlet section 103, 104 towards the outlet section 203, 204. Preferably , the outlet section 203, 204 has a smaller cross-section than the cross-section of the inlet section 103, 104. This reduction in section further accelerates the jet J1, J2.

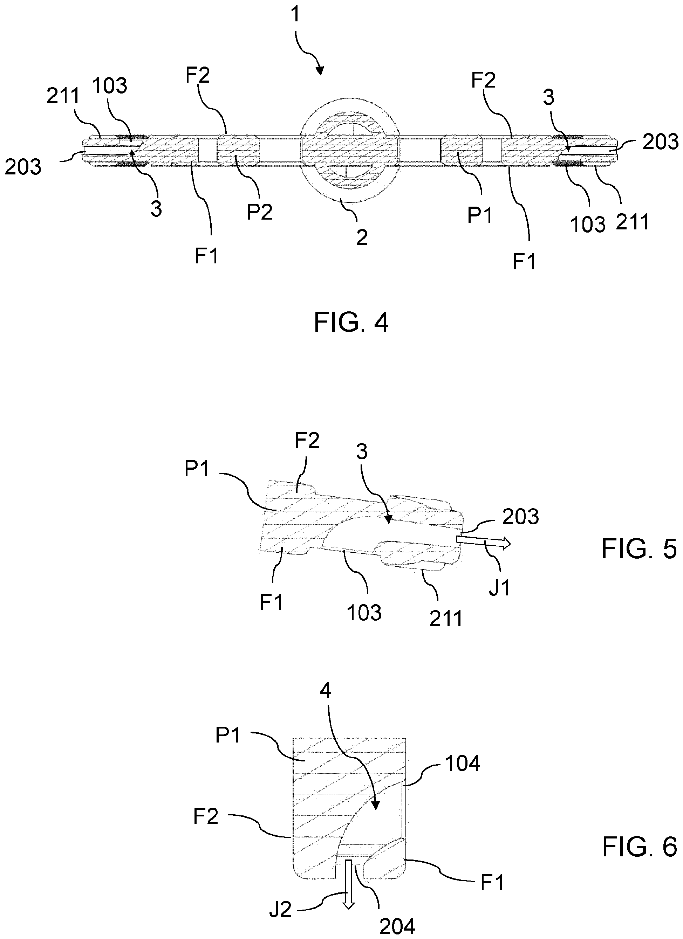

In accordance with a particularly advantageous embodiment, the jet generating channel 3, 4 comprises at least one curved portion comprised between the inlet section 103, 104 and the outlet section 203, 204. For example, with reference to Figure 5, it may be observed that the jet generating channel 3 comprises a curved initial portion and a rectilinear end portion. With reference to Figure 6, it may be observed that in the non-limiting example shown therein, the jet generating channel 4 is instead curved substantially or entirely along the whole extension thereof.

In accordance with an advantageous embodiment:
- the first washing blade P1 has a jet generating channel having a first inlet section 103, 104;
- the second washing blade P2 has a jet generating channel having a second inlet section 103, 104; and
- the first inlet section 103 and the second inlet section 104 are arranged on faces F1, F2 of the cleaning device 1 which are opposite to each other. For example, with reference to Figure 4, it may be observed therein that the inlet section 103 of the generating channel 3 of the washing blade P1 is provided on the face F1 of the washing blade P1, while the inlet section of the generating channel 3 of the washing blade P2 is provided on the face F2 of the washing blade P2. The same applies to the jet generating channels 4 and the inlet sections 104 thereof.

If the washing blade P1, P2 comprises a jet generating channel 3 adapted to produce as output a jet J1 directed towards the side wall 23 of the mixing vessel 20, preferably the inlet section 103 axially extends along the whole axial extension of the washing blade P1, P2, or along a substantial portion thereof. In this case, it is advantageous to provide that the aforesaid jet generating channel 3 is defined in the thickness of the blade P1, P2, that the inlet section 103 is a continuous recess defined on one face of the washing blade P1, P2 and that the outlet section 203 is divided into several sections by means of at least one stiffening partition 210, preferably by means of a plurality of stiffening partitions 210.

In accordance with an advantageous embodiment, the washing blade P1, P2 comprises, on at least one main face F1, an array of raised elements 211, for example raised bars 211, arranged close to an outer radial edge of the main face F1. Said raised elements 211 contribute to further increase the cleaning efficiency of the cleaning device 1, because they prevent the formation of laminar flows of washing liquid directed upwards which may not be re-directed towards the side wall 23.

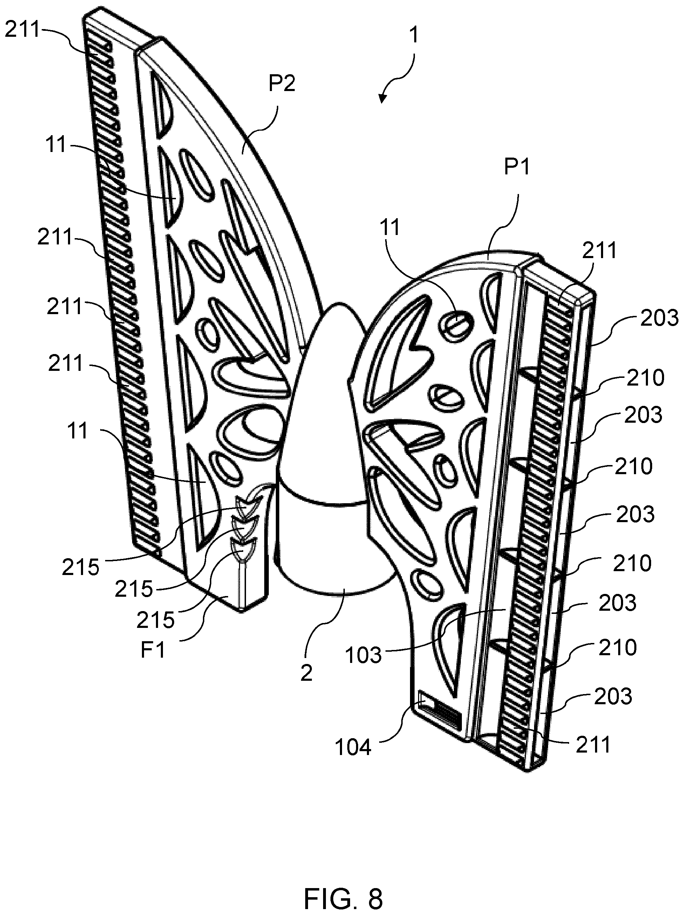

Figure 8 shows a further embodiment of the cleaning device 1 which differs from the cleaning device described up to now in that a base portion of the washing blade P1, P2 comprises at least one engagement element 215 adapted to engage with the processing tool 35 to stabilize the axial position of the washing blade P1, P2 or in general of the cleaning device 1 during the rotation of the cleaning device. In the particular non-limiting example shown in Figure 8, said engagement element 215 comprises one or more engagement recesses, in particular three engagement recesses, configured to engage with the processing tool 35, in particular with a blade of the processing tool 35. It is clear that, according to the arrangement height of the blade with respect to the cleaning device, only one of the three recesses engages with the blade during rotation. Although in Figure 8 the at least one engagement element 215 is provided on the washing blade P1 and is visible from the side of the face F1, it is clear that at least one identical or similar engagement element 215 may be provided on the washing blade P2 so that it is visible from the side of face F2.

An example of the operation of a cleaning device 1 of the type described above will now be illustrated. After using the food processor 30 to obtain a food preparation, for example a dough, the cleaning device 1 is inserted into the mixing vessel 20 and is mechanically coupled to the rotating shaft 32, for example, it is fixed to the processing tool 35. Before or after said coupling, washing liquid is poured inside the mixing vessel 20. For example, water is poured. The additional use of any detergents is possible but not recommended to prevent the formation of excess foam.

Not often, a modest amount of washing liquid is required, for example, an amount which, starting from the bottom wall 24, is such as to cover less than a quarter, for example, less than a fifth, of the axial extension of the cleaning device 1. Conveniently, the mixing vessel 20 is closed by means of the closing device thereof. The motor 31 is operated at a speed so that, for example, the cleaning device 1 rotates at at least 600 revolutions per minute, preferably at at least 900 revolutions per minute, for example at 1,000 or 1,100 revolutions per minute. The motor 31 is operated, for example, for about 30 s or for about 1 min.

After stopping the motor 30, the cleaning device 1 is removed from the inside of the mixing vessel 20. The mixing vessel 20 is removed from the base 33 and the washing liquid and the dough portions suspended therein or dissolved, which have been effectively removed from the inner wall 23, 24, are manually poured out of the mixing vessel 20.

It should be noted that the description given up to now of the cleaning device 1 also corresponds to the description of a method for cleaning the mixing vessel 20 for a food processor 30 provided with a motor 31 with a rotating shaft 32, comprising the steps of:
- Inserting a cleaning device 1 of the type generally described above into the mixing vessel 20 and coupling it to the food processor 30 so as to connect the central hub 2 to the rotating shaft 32;
- Pouring a washing liquid into the mixing vessel 20, preferably so that the level of the washing liquid in the mixing vessel 20 is less than a quarter of a main axial extension of the cleaning device 1;
- Operating the motor 31 to rotate the cleaning device 1.

From the above, it is apparent that the cleaning device 1 of the type described above allows to fully achieve the preset objects in terms of overcoming the drawbacks of the prior art. Experimental tests have further proven that a cleaning device 1 of the type described above has surprising performances in terms of cleaning efficiency even in particularly hostile situations in which residues of food preparations adhere tenaciously to the inside of the mixing vessel 20. Furthermore, with respect to the known solutions, wear issues are solved and electrical consumption and required washing liquid amounts are reduced.

Without prejudice to the principle of the invention, the embodiments and the manufacturing details may be broadly varied with respect to the above description merely given by way of a non-limiting example, without departing from the scope of the invention as defined in the appended claims.

## Claims

1. A cleaning device (1) of a mixing vessel (20) for a food processor (30) having a motor (31) provided with a rotating shaft (32), wherein the mixing vessel (20) comprises an inner wall (23, 24), adapted to contain a washing liquid and comprising a side wall (23) and a bottom wall (24), wherein the cleaning device (1) comprises:
- a central hub (2) adapted and configured to be operatively connected, directly or indirectly, to the rotating shaft (32) to allow the cleaning device (1) to rotate about a rotation axis (Z-Z) inside the mixing vessel (20);
- at least one washing blade (P1, P2) which is integral with the central hub (2) and radially protruding from the central hub (2) with respect to the rotation axis (Z-Z), wherein the washing blade (P1, P2), due to the rotation of the central hub (2), is configured to rotate about the rotation axis (Z-Z);
**characterized in that** the washing blade (P1, P2) comprises at least one jet generating channel (3,4) having an inlet section (103, 104) adapted to collect a portion of the washing liquid during the rotation of the washing blade (P1, P2) and an outlet section (203, 204) adapted and configured to provide a jet (J1, J2) directed towards the inner wall (23, 24) and obtained by conveying towards said outlet section (203, 204) the portion of washing liquid collected.

2. A cleaning device (1) according to claim 1, wherein said jet (J1, J2) is a jet (J1) directed towards the side wall (23) and/or a jet (J2) directed towards the bottom wall (24).

3. A cleaning device (1) according to claims 1 or 2, wherein said at least one jet generating channel (3,4) comprises a first channel (3) adapted to direct a first jet (J1) towards the side wall (23) and at least one second channel (4) adapted to direct a second jet (J2) towards the bottom wall (24).

4. A cleaning device (1) according to any one of the preceding claims, comprising a first washing blade (P1) and a second washing blade (P2) which are radially aligned with each other and arranged on opposite sides with respect to the central hub (2).

5. A cleaning device (1) according to claim 4, wherein:
- the first washing blade (P1) has a jet generating channel having a first inlet section (103, 104);
- the second washing blade (P2) has a jet generating channel having a second inlet section (103, 104); and
- the first inlet section (103) and the second inlet section (104) are arranged on faces (F1, F2) of the cleaning device (1) which are opposite to each other.

6. A cleaning device (1) according to any one of the preceding claims, wherein said jet (J1, J2) is a jet (J1) having a radial direction.

7. A cleaning device (1) according to any one of claims 1 to 5, wherein said jet (J1, J2) is a jet (J2) having an axial direction.

8. A cleaning device (1) according to any one of the preceding claims, wherein the jet generating channel (3, 4) comprises at least one curved portion comprised between the inlet section (103, 104) and the outlet section (203, 204) .

9. A cleaning device (1) according to any one of the preceding claims, wherein the washing blade (P1, P2) is devoid of brushes or bristles.

10. A cleaning device (1) according to any one of the preceding claims, wherein the washing blade (P1, P2) is a plate-like blade and comprises two main faces (F1, F2) which are opposite to each other.

11. A cleaning device (1) according to claim 10, comprising, on at least one main face (F1), an array of raised elements (211) arranged close to an outer radial edge of the main face (F1).

12. A cleaning device (1) according to any one of the preceding claims, wherein a plurality of through holes (11) is defined in the thickness of the washing blade (P1, P2) .

13. A mixing vessel (20) of a food processor (30) comprising a cleaning device (1) according to any one of the preceding claims, removably associable with the mixing vessel (20), wherein the washing blade (P1, P2) is spaced apart from the side wall (23) and/or from the bottom wall (24) and does not interfere in abutment with said side wall (23) and/or with said bottom wall (24).

14. A food processor (30) comprising a mixing vessel (20) according to claim 13.

15. A method for cleaning the mixing vessel (20) of a food processor (30) provided with a motor (31) with a rotating shaft (32), comprising the steps of:
- Inserting a cleaning device (1) according to any one of claims 1 to 12 into the mixing vessel (20) and coupling it to the food processor (30) so as to connect the central hub (2) to the rotating shaft (32) ;
- Pouring a washing liquid into the mixing vessel (20), preferably so that the level of the washing liquid in the mixing vessel (20) is less than a quarter of a main axial extension of the cleaning device (1);
- Operating the motor (31) to rotate the cleaning device (1) .
